# EUROPEAN PATENT APPLICATION

(11) **EP 1 657 719 A1**
(43) Date of publication of application: **17.05.2006**
(21) Application number: 04771818.4
(22) Date of filing: 12.08.2004
(51) Int. Cl.: G11B 7/24, G11B 7/26, G11B 7/00, B41M 5/26

(54) **OPTICAL RECORDING MEDIUM AND PROCESS FOR PRODUCING THE SAME, DATA RECORDING METHOD AND DATA REPRODUCING METHOD FOR OPTICAL RECORDING MEDIUM**

(30) Priority: 22.08.2003 JP 2003298329
(71) Applicant: TDK Corporation, Chuo-ku, Tokyo 103-8272 (JP)
(72) Inventor: KIKUKAWA, Takashi, c/o TDK Corporation, Tokyo 103-8272 (JP); FUKUZAWA, Narutoshi, c/o TDK Corporation, Tokyo 103-8272 (JP); KOBAYASHI, Tatsuhiro, c/o TDK Corporation, Tokyo 103-8272 (JP)
(74) Representative: Grünecker, Kinkeldey, Stockmair & Schwanhäusser Anwaltssozietät
(86) International application number: PCT/JP2004/011857
(87) International publication number: WO 2005/020223

(57) **Abstract**

A supporting substrate 11 and a light-transmitting layer 12, and further between the light-transmitting layer and the supporting substrate 11a dielectric layer 31, a noble metal oxide layer 23, a dielectric layer 32, a light absorption layer 22 and a dielectric layer 33 in this arranging order when viewed from the light-transmitting layer side are provided. The light absorption layer 22 contains as a main component a material that can be represented by ${( S {b}_{a} T {e}_{1 - a} )}_{1 - b} M {A}_{b}$
(wherein MA is an element other than antimony (Sb) and tellurium (Te), 0<a<1 and 0≤b<1), and besides,
that is different from an intermetallic compound represented by ${{ {( G e T e )}_{c} {( S {b}_{2} T {e}_{3} )}_{1 - c} }}_{d} M {B}_{1 - d}$ (wherein MB is an element other than antimony (Sb), tellurium (Te) and germanium (Ge), c is 1/3, 1/2 or 2/3, and 0<d≤1).

## Description

### <Technical Field>

The present invention relates to an optical recording medium and a manufacturing method thereof, and more particularly, to an optical recording medium of the type which forms recording marks through the evolution of gas and a manufacturing method thereof. In addition, the invention is concerned with a method of recording data on an optical recording medium and a method of reproducing data recorded on an optical recording medium, and more particularly, with a method of recording data on an optical recording medium of the type which forms recording marks through the evolution of gas and a method of reproducing data recorded on such an optical recording medium.

### <Background Art>

In recent years, optical recording media, typified by CDs (Compact Discs) and DVDs (Digital Versatile Discs), have been widely used as recording media for recording high-volume digital data.

With respect to the CDs, a compact disc of the type which can neither write data once more nor rewrite data (CD-ROM) has a structure that a reflective layer and a protective layer are stacked on a light-transmitting substrate about 1.2 mm in thickness, and reproduction of data recorded on the compact disc can be made by the irradiation of reflective layer with a laser beam having a wavelength of about 780 nm from the light-transmitting substrate side. On the other hand, a compact disc of the type which can write data once (CD-R) and a compact disc of the type which can rewrite data (CD-RW) have a structure that a recording layer is provided additionally between a light-transmitting substrate and a reflective layer, and recording of data and reproduction of recorded data can be made by irradiation of the recording layer with a laser beam having a wavelength of about 780 nm from the light-transmitting substrate side.

For focusing a laser beam on CD, an objective lens with a numerical aperture of about 0.45 is used, and thereby the beam spot diameter of the laser beam on the reflective layer or the recording layer is narrowed down to about 1.6 µm. Thus the CD ensures a recording capacity of about 700 MB and a data transfer rate of about 1 Mbps at a standard linear velocity (about 1.2 m/sec).

With respect to the DVDs also, a digital versatile disc of the type which can neither write data once more nor rewrite data (DVD-ROM) has a structure that a laminate having a reflective layer and a protective layer on a light-transmitting substrate about 0.6 mm in thickness and a dummy substrate about 0.6 mm in thickness are bonded together through an adhesive layer, and reproduction of data recorded thereon can be made by the reflective layer being irradiated with a laser beam having a wavelength of about 635 nm from the light-transmitting substrate side. On the other hand, a digital versatile disc of the type which can write data once (DVD-R or the like) and a digital versatile disc of the type which can rewrite data (DVD-RW or the like) have a structure that a recording layer is provided additionally between a light-transmitting substrate and a reflective layer, and enables the recording and reproduction of data by the recording layer being irradiated with a laser beam having a wavelength of about 635 nm from the light-transmitting substrate side.

For focusing a laser beam on DVD, an objective lens with a numerical aperture of about 0.6 is used, and thereby the beam spot diameter of the laser beam on the reflective layer or the recording layer is narrowed down to about 0.93 µm. In this way, recording and reproducing are made on DVDs by use of not only a laser beam with a shorter wavelength but also an objective lens having a greater numerical aperture than those on CDs. Therefore, the beam spot diameter achieved on DVDs is smaller than that on CDs. As a result, the DVDs ensure a recording capacity of about 4.7 GB per side and a data transfer rate of about 11 Mbps at a standard linear velocity (about 3.5 m/sec).

Quite recently, optical recording media exceeding DVDs in data recording capacity and capable of ensuring data transfer rates in excess of those of the DVDs have been proposed. In order to ensure high capacities and high-rate data transfer for such next-generation optical recording media, both a laser beam with a wavelength of about 405 nm and an objective lens with a numerical aperture of about 0.85 are used. By such a combined use, the beam spot diameter of the laser beam is narrowed down to about 0.43 µm, and a recording capacity of about 25 GB per side and a data transfer rate of about 36 Mbps at a standard linear velocity (about 4.9 m/sec) can be achieved.

As mentioned above, an objective lens very high in numerical aperture is used for next-generation optical recording media, so a very thin thickness setting of about 100 µm is chosen for a light-transmitting layer functioning as a light path of laser beam with the intention of not only ensuring a sufficient tilt margin but also controlling the occurrence of coma. In the case of next-generation optical recording media, therefore, it is difficult to form various functional layers including a recording layer on a light-transmitting substrate as in the case of current optical recording media, such as CDs and DVDs. Under these circumstances, a method of forming a reflective layer and a recording layer on a supporting substrate, further forming thereon a thin resin layer by use of a spin coating technique or the like and utilizing the thin resin layer as light-transmitting layer is under study. In other words, the next-generation optical recording media are produced in a manner that layers are formed successively from the distant side of the incidence plane of light, in contrast to current optical recording media wherein layers are formed successively from the near side of the incidence plane of light.

As described above, increases in capacity and data transfer rate of optical recording media are achieved mainly by reduction in the beam spot diameter of laser beam. Therefore, achievement of any further increases in the capacity and the data transfer rate requires an even larger reduction in the beam spot diameter. However, the use of a laser beam of any shorter wavelength causes a sharp increase in absorption of the laser beam by a light-transmitting layer and intensifies deterioration of the light-transmitting layer with time, so it is difficult to use a laser beam with any shorter wavelength. And it is also difficult to increase any further the numerical aperture of an objective lens in consideration of difficulty in lens design, provision for a tilt margin and so on. In other words, it can be said that any further reduction in the beam spot diameter of a laser beam is extremely difficult.

Such being the case, optical recording media of super-resolution type have been put forth of late as another approach to attain enhanced capacity and increased data transfer rate. The term "optical recording media of super-resolution type" refers to the optical recording media that enable formation of recording marks finer than the resolution limit and reproduction of data from the marks of recording, and the use of such optical recording media makes it possible to achieve increases in capacity and data transfer rate without reduction in beam spot diameter.

Explaining more specifically, the diffraction limit d₁ is given by the equation, ${d}_{1} = λ / 2 N A$
wherein λ stands for the wavelength of a laser beam and NA stands for the numerical aperture of an objective lens. Accordingly, in the case of an optical recording medium in which each data is represented in the length of a mark of recording and the length of a blank area, namely the distance between edges, as in the cases of CD and DVD, the single frequency signal resolution limit d₂ is given by the equation, ${d}_{2} = λ / N A .$

That is to say, when the length of the shortest mark of recording and the length of the shortest blank area are below the resolution limit in optical recording media of ordinary type, but not of super-resolution type, it becomes impossible to discriminate between the mark of recording and the blank area. In contrast thereto, optical recording media of super-resolution type can utilize marks of recording and blank areas whose lengths are below the resolution limit, so the attainment of increases in capacity and data transfer rate becomes possible without reduction in beam spot diameter.

As to the optical recording media of super-resolution type, the optical recording media of super resolution type hitherto referred to as "Scattering-type Super RENS" have been proposed (See Non-patent Document 1). In such a type of optical recording medium, a phase-changing material layer and a reproduction layer with metal oxide are used, and it is thought that the metal oxide constituting the reproduction layer is decomposed in the high-energy area situated at a beam spot center when irradiated with a laser beam and the laser beam is scattered by the thus produced metal particulates to generate near-field light. As a result, the phase-changing material layer is irradiated locally with the near-field light. So the explanation is offered that utilization of such a phase change makes it possible to perform super-resolution recording and super-resolution reproduction. And the inference is made that, when the laser beam moves away, the metal produced by decomposition in the reproduction layer is combined with oxygen again and returns to the original metal oxide, so repetition of rewriting becomes possible.

However, the studies made by the present inventors revealed that, in the optical recording media of super resolution type referred to as "Scattering-type Super RENS (Super Resolution Near-field Structure)", it hardly occurred that phase changes in the phase-changing material layers manifested themselves in the form of signals, and besides, the decompositions in the reproduction layers were irreversible. In other words, it turned out that the optical recording media of super resolution type referred to as "Scattering-type Super RENS" were not optical recording media of rewritable type which can form reversible recording marks in the phase-changing material layers, but it was possible to materialize them as optical recording media of write-once type which can form irreversible recording marks in the reproduction layers (noble metal oxide layers) (See Non-patent Document 2).

Herein, a reason for the possibility of recording marks finer than the resolution limit being formed in a noble metal oxide layer is in that the noble metal oxide layer is decomposed locally in high-energy areas situated at beam spot centers and thereby gas bubbles are evolved to cause plastic deformation in the areas concerned. The portions having undergone plastic deformation are used as marks of recording, while the portions not having undergone any plastic deformation are used as blank areas. On the other hand, although no reason for the possibility of data being reproduced from the thus formed fine marks of recording is clarified yet, excellent signal characteristics are obtained in the super-resolution reproduction using the laser beam with a wavelength of 635 nm and the objective lens with a numerical aperture of 0.6 as described in Non-patent Document 2. The combination of the laser beam with a wavelength of 635 nm and the objective lens with a numerical aperture of 0.6 is, as mentioned above, an optical system used for recording and reproducing on DVDs. Therefore, it can be expected that, like the next-generation optical recording media, the super-resolution optical recording media will also ensure even higher densities and data transfer rates by use of a laser beam with a still shorter wavelength and an objective lens with a still greater numerical aperture.

[Non-patent Document 1] "A near-field recording and readout technology using a metallic probe in an optical disk", Jpn. J. Appl. Phys., compiled by The Japan Society of Applied Physics, 2000, Volume 39, pages 980-981

[Non-patent Document 2] "Rigid bubble pit formation and huge signal enhancement in super-resolution near-field structure disk with platinum-oxide layer", Applied Physics Letters, American Institute of Physics, December 16, 2002, Volume 81, Number 25, pp. 4697-4699

However, as mentioned above, the mechanism for reproducing possibilities of data from marks of recording finer than resolution limit on super-resolution optical recording media is unknown, so that there is some question as to whether super-resolution reproduction is feasible or not in the case of using a laser beam with a wavelength shorter than 635 nm and an objective lens with a numerical aperture greater than 0.6 as well. Even if the reproducing is possible, it is unfeasible to predict what layer structure, what components for each layer and what settings for layer thickness and so on should be chosen in order to obtain excellent signal characteristics. Since it in particular turned out that the phase-changing material layer hitherto regarded as "recording layer" didn't function actually as recording layer, there is a lot of uncertainty about what contributions the phase-changing material layer has to the formation of recording marks, what changes are caused in signal characteristics by materials used, and so on.

### <Disclosure of the Invention>

Therefore, an object of the invention is to provide an optical recording medium that enables super-resolution recording and super-resolution reproduction by use of a laser beam with a shorter wavelength and an objective lens with a greater numerical aperture, and besides, that has undergone optimization of a material constituting a layer comparable to a phase-changing material layer, and further to provide a manufacturing method thereof.

Another object of the invention is to provide a method of recording data on a super-resolution optical recording medium, in which a material constituting a layer comparable to a phase-changing material layer is optimized, by use of a laser beam with a shorter wavelength and an objective lens with a greater numerical aperture, and to provide a method of reproducing the data from the aforesaid recording medium.

An optical recording medium according to the invention is characterized by being provided with a supporting substrate ranging in thickness from 0.6 mm to 2.0 mm and a light-transmitting layer ranging in thickness from 10 µm to 200 µm, and by further having between the light-transmitting layer and the supporting substrate a first dielectric layer, a noble metal oxide layer, a second dielectric layer, a light absorption layer and a third dielectric layer in this arranging order when viewed from the light-transmitting layer side, wherein the light absorption layer contains as a main component a material that can be represented by${( S {b}_{a} T {e}_{1 - a} )}_{1 - b} M {A}_{b}$
(wherein MA is an element other than antimony (Sb) and tellurium (Te), 0<a<1 and 0≤b<1), and besides,
that is different from an intermetallic compound represented by ${{ {( G e T e )}_{c} {( S {b}_{2} T {e}_{3} )}_{1 - c} }}_{d} M {B}_{1 - d}$
(wherein MB is an element other than antimony (Sb), tellurium (Te) and germanium (Ge), c is 1/3, 1/2 or 2/3, and 0<d≤1).

In accordance with the invention, super-resolution recording and super-resolution reproduction can be performed at a λ/NA setting of 640 nm or below by use of a laser beam with a wavelength (λ) shorter than about 635 nm and an objective lens with a numerical aperture greater than about 0.6. Moreover, the main component in the light absorption layer is the foregoing material, so that the noble metal oxide layer has no inhibition in becoming locally deformed at the time of recording and it becomes possible to acquire excellent signal characteristics even when minute recording marks are formed.

In addition, it is preferable that platinum oxide (PtOₓ) is contained in the noble metal oxide layer. In this case, it is especially preferable that the noble metal oxide layer is constituted substantially of platinum oxide (PtOₓ), but there's nothing wrong with containing therein other components and inevitably mixed impurities. The use of platinum oxide (PtOₓ) as an component in the noble metal oxide layer makes it possible to obtain excellent signal characteristics and sufficient durability.

It is also preferable that the optical recording medium according to the invention further has a reflective layer provided between the supporting substrate and the third dielectric layer. By providing such a reflective layer, the level of reproduction signals is heightened and the reproduction stability is substantially enhanced as well. The term "reproduction stability" as used herein refers to the resistance to a deterioration phenomenon caused by reproduction, namely a phenomenon that the noble metal oxide layer changes its state by energy of a laser beam applied thereto at the time of reproduction and thereby a noise increase and a carrier decrease is caused to result in CNR reduction. The thickness of the reflective layer is preferably from 5 nm to 200 nm, far preferably from 10 nm to 100 nm, particularly preferably from 10 nm to 50 nm. By setting the reflective layer thickness at such a value, it becomes possible to achieve a sufficient reproduction stability enhancement effect without a big drop in productivity.

And it is preferable that the thickness of the noble metal oxide layer is from 2 nm to 50 nm, the thickness of the second dielectric layer is from 5 nm to 100 nm, the thickness of the light absorption layer is from 5 nm to 100 nm and the thickness of the third dielectric layer is from 10 nm to 140 nm. According to such thickness adjustments, it becomes possible to ensure excellent characteristics in super-resolution recording and super-resolution reproduction utilizing a laser beam with a wavelength of about 405 nm and an objective lens with a numerical aperture of about 0.85 which are those used for next-generation optical recording media.

The method of manufacturing an optical recording medium according to the invention is characterized by including a first process of forming on a supporting substrate a reflective layer, a third dielectric layer, a light absorption layer, a second dielectric layer, a noble metal oxide layer and a first dielectric layer in the order of mention and a second process of forming a light-transmitting layer on the first dielectric layer, and by incorporating into the light absorption layer a material as a main component that can be represented by ${( S {b}_{a} T {e}_{1 - a} )}_{1 - b} M {A}_{b}$
(wherein MA is an element other than antimony (Sb) and tellurium (Te), 0<a<1 and 0≤b<1), and besides
that is different from an intermetallic compound represented by ${{ {( G e T e )}_{c} {( S {b}_{2} T {e}_{3} )}_{1 - c} }}_{d} M {B}_{1 - d}$
(wherein MB is an element other than antimony (Sb), tellurium (Te) and germanium (Ge), c is 1/3, 1/2 or 2/3, and 0<d≤1).

In accordance with the invention, it becomes possible to manufacture optical recording media which enable super-resolution recording and super-resolution reproduction to be performed at a λ/NA setting of 640 nm or below by use of a laser beam with a wavelength (λ) shorter than about 635 nm and an objective lens with a numerical aperture greater than about 0.6. Moreover, since the main component in the light absorption layer is the foregoing material, excellent signal characteristics can be obtained even when minute recording marks are formed. Moreover, since the main component in the light absorption layer is the foregoing material, excellent signal characteristics can be obtained even when minute recording marks are formed. It is preferable that the first process is carried out according to a vapor deposition method and the second process is carried out according to a spin coating method.

The data recording method according to the invention is a data recording method in which data is recorded by a laser beam being applied to the foregoing optical recording medium from the light absorption layer side, and is characterized in that, when the wavelength of the foregoing laser beam is represented as λ and the numerical aperture of the objective lens for focusing the laser beam is represented as NA, the λ/NA value is set at 640 nm or below and a recording mark train including recording marks λ/4NA or below in length is recorded. On the other hand, the data reproducing method according to the invention is a data reproducing method in which data is reproduced by a laser beam being applied to the foregoing optical recording medium from the light-transmitting layer side, and is characterized in that, when the wavelength of the foregoing laser beam is represented as λ and the numerical aperture of the objective lens for focusing the laser beam is represented as NA, the λ/NA value is set at 640 nm or below and the data is reproduced from a train of recorded marks including the recorded marks λ/4NA or below in length. In both cases, it is most favorable that the wavelength of the laser beam used is set at about 405 nm and the numerical aperture of the objective lens used is set at about 0.85. By doing so, the same recording-and-reproducing apparatus as used for next-generation optical recording media can be utilized, so the costs for development and production of recording-and-reproducing apparatus can be reduced.

In accordance with the invention, super-resolution recording and super-resolution reproduction can be performed at a λ/NA setting of 640 nm or below by use of a laser beam with a wavelength shorter than about 635 nm and an objective lens with a numerical aperture greater than about 0.6, and it becomes possible to obtain excellent characteristics in super-resolution recording and super-resolution reproduction, notably those using a laser beam with a wavelength shorter than about 405 nm and an objective lens with a numerical aperture greater than about 0.85 which are those used for next-generation optical recording media. Accordingly, the same recording-and-reproducing apparatus as used for next-generation optical recording media can be utilized, so the costs for development and production of recording-and-reproducing apparatus can be reduced.

### <Brief Description of the Drawings>

Fig. 1(a) is a notch-cut oblique view showing the outward appearance of an optical recording medium 10 according to a preferred embodiment of the invention, and Fig. 1(b) is a partial cross-sectional view of the magnified A region shown in Fig. 1(a).
Fig. 2 is a diagram showing schematically a situation that occurs when the optical recording medium 10 is irradiated with a laser beam 40.
Fig. 3(a) is a plan view showing a beam spot of the laser beam 40 on a noble metal oxide layer 23, and Fig. 3(b) is a curve showing an intensity distribution in the beam spot.
Fig. 4 is an illustration demonstrating the size of bubble bit 23a (a mark of recording).
Fig. 5 is a drawing of the waveform showing an example of an intensity-modulation pattern of the laser beam 40 under recording.
Fig. 6 is a drawing of the waveform showing another example of an intensity-modulation pattern of the laser beam 40 under recording.
Fig. 7 is a graph showing schematically a relationship between a recording power of the laser beam 40 and a CNR of the reproduction signal produced by the subsequent reproduction.
Fig. 8 is a graph showing schematically a relationship between a reproducing power of the laser beam 40 and a CNR of the reproduction signal produced by the subsequent reproduction.
Fig. 9 is a graph showing a result of CNR measurements.

### <Best Modes for Carrying Out the Invention>

Suitable modes for carrying out the invention are illustrated below in detail by reference to the drawings attached.

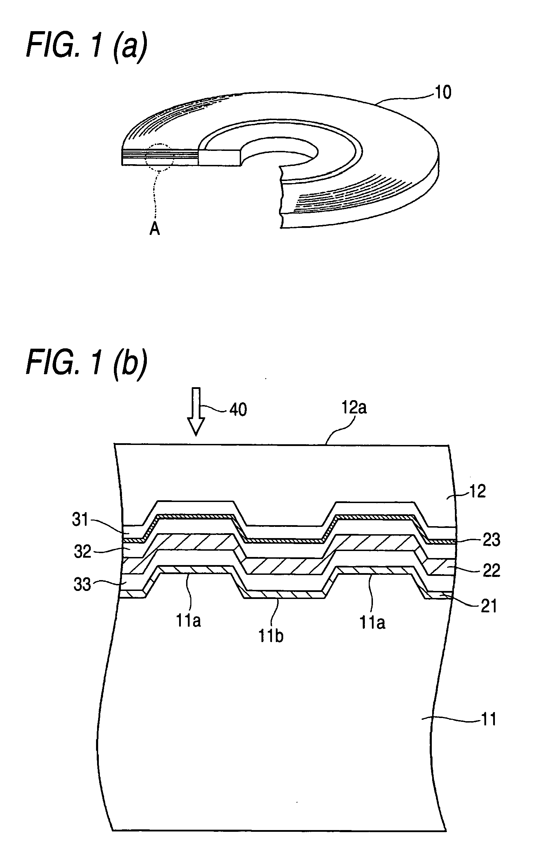

Fig. 1(a) is a notch-cut oblique view showing the outward appearance of an optical recording medium 10 according to a preferred embodiment of the invention, and Fig. 1(b) is a partial cross-sectional view of the magnified A region shown in Fig. 1(a).

An optical recording medium 10 according to an embodiment of the invention has, as shown in Fig. 1(a), the shape of a disk, and it is structured, as shown in Fig. 1(b), to include a supporting substrate 11 and a light-transmitting layer 12, and further to provide a reflective layer 21, light absorption layer 22 and a noble metal oxide layer 23 between the supporting substrate 11 and the light-transmitting layer 12 in this arranging order, and furthermore to provide dielectric layers 33, 32 and 31 between the reflective layer 21 and the light absorption layer 22, between the light absorption layer 22 and the noble metal oxide layer 23 and between the noble metal oxide layer 23 and the light-transmitting layer 12, respectively. The recording and reproduction of data can be performed by the optical recording medium 10 being irradiated with the laser beam 40 from the light-incidence plane 12a side while it is rotated. The wavelength setting of a laser beam 40 can be made at a value below 635 nm, and it is most favorable to set the wavelength of the laser beam 40 at the order of 405 nm as used for next-generation optical recording media in particular. And the numerical aperture setting of an objective lens for focusing the laser beam 40 can be made at a value greater than 0.6, particularly a value of the order of 0.85 as used for next-generation optical recording media.

The supporting substrate 11 is a disk-shaped substrate used for ensuring mechanical strength required of the optical recording medium 10 and, on one side thereof, a groove 11a and a land 11b for guiding the laser beam 40 are formed in a spiral fashion so as to trend toward the peripheral part from the proximity to the central part or toward the proximity to central part from the peripheral part. The supporting substrate 11 has no particular restrictions as to material and thickness so far as they can ensure mechanical strength. For instance, the material used for the supporting substrate 11 may be glass, ceramics, resin or so on. Easiness of molding considered, however, resin is preferred over the others. Examples of such resin include polycarbonate resin, olefin resin, acrylic resin, epoxy resin, polystyrene resin, polyethylene resin, polypropylene resin, silicone resin, fluorocarbon resin, ABS resin and urethane resin. Of these resins, polycarbonate resin and olefin resin in particular are preferred in point of machinability. Incidentally, since the supporting substrate 11 is not in the optical path of the laser beam 40, there is no necessity to choose a material highly pervious to light in the wavelength range concerned.

On the other hand, it is appropriate that the thickness of the supporting substrate 11 be set at a value necessary and sufficient for ensuring the mechanical strength, specifically ranging from 0.6 mm to 2.0 mm. In consideration of compatibility with the current optical recording media and the next-generation optical recording media, it is favorable that the thickness is set at a value ranging from 1.0 mm to 1.2 mm, particularly the order of 1.1 mm. The diameter of the supporting substrate 11 has also no particular limitations, but it is preferred to set the diameter at the order of 120 mm with consideration given to the compatibility with the current optical recording media and the next-generation optical recording media.

The light-transmitting layer 12 is a layer lying in the optical path of the laser beam 40 applied during recording and reproducing. The material thereof has no particular restrictions so long as it has sufficiently high transmittance in the wavelength region of the laser beam 40 used, but light-transmitting resins, for example, can be used. In the optical recording medium 10 according to this embodiment of the invention, the thickness of the light-transmitting layer 12 is set at a value ranging from 10 µm to 200 µm. This is because, when the thickness of the light-transmitting layer 12 is below 10 µm, the beam diameter on the light-incidence plane 12a becomes extremely small, so that flaws and dust on the light-incidence plane 12a have too great influence upon the recording and reproducing; while, when the thickness is increased beyond 200 µm, it becomes difficult to ensure tilt margin and to control coma. When the compatibility with the next-generation optical recording media is considered, the thickness is set preferably at a value ranging from 50 µm to 150 µm, particularly preferably at a value ranging from 70 µm to 120 µm.

The reflective layer 21 is a layer performing functions in increasing the intensity of reproduction signals and improving reproduction stability. Examples of a material usable for the reflective layer 21 include single metals, such as gold (Au), silver (Ag), copper (Cu), platinum (Pt), aluminum (Al), titanium (Ti), chromium (Cr), iron (Fe), cobalt (Co), nickel (Ni), magnesium (Mg), zinc (Zn) and germanium (Ge), and alloys made from two or more of these metals. The thickness of the reflective layer 21, though not particularly limited, is set preferably at a value ranging from 5 nm to 200 nm, far preferably at a value ranging from 10 nm to 100 nm, particularly preferably at a value ranging from 10 nm to 50 nm. This is because, when the thickness of the reflective layer 21 is below 5 nm, the effect of enhancing reproduction stability cannot be fully achieved; while, when the thickness of the reflective layer 21 is increased beyond 200 nm, too much time is required for forming the layer and the productivity is lowered, and besides, further increase in reproduction stability enhancement effect can hardly be gotten. Compared with such a thickness range, the thickness setting of the reflective layer 21 at a value ranging from 10 nm to 100 nm, particularly from 10 nm to 50 nm, makes it possible to gain sufficient reproduction stability enhancement effect without a sharp drop in productivity. Incidentally, it is not essential to provide the reflective layer 21 in the present optical recording medium, but it becomes possible to achieve the foregoing effects by providing this layer.

The light absorption layer 22, though it is a layer hitherto thought to function as "phase-change recording layer" from the compositional point of view, acts in the invention as a layer that absorbs energy of the laser beam 40 and converts it into heat, what's more that retains part of recorded signals through deformation of itself. As a material constituting the light absorption layer 22 according to the invention, an alloy of antimony (Sb) and tellurium (Te) or a material obtained by adding additives to such an alloy is used as a main component. The expression "as a main component" as used herein implies that it is permissible to contain a small amount (15 mole % or less) of other materials and inevitably mixed impurities. As materials having the foregoing functions are known phase-changing materials represented by ${( S {b}_{a} T {e}_{1 - a} )}_{1 - b} M {A}_{b}$
(wherein MA is an element other than antimony (Sb) and tellurium (Te), 0<a<1 and 0≤b<1) and
phase-changing materials of intermetallic compound type represented by ${{ {( G e T e )}_{c} {( S {b}_{2} T {e}_{3} )}_{1 - c} }}_{d} M {B}_{1 - d}$
(wherein MB is an element other than antimony (Sb), tellurium (Te) and germanium (Ge), c is 1/3, 1/2 or 2/3, and 0<d≤1). As to the material constituting the light absorption layer 22 in the invention, however, the phase-changing material represented by ${( S {b}_{a} T {e}_{1 - a} )}_{1 - b} M {A}_{b}$
is used as a main component.

In the above formula, the b value setting of 0≤b≤0.15 is preferable for the invention. This is because, when the b value is increased beyond 0.15, there is a fear that the light absorption layer 22 may have a light absorption coefficient lower than the value required thereof, and besides, there is a fear that the thermal conductivity may fall short of the value required for the light absorption layer 22.

The element MA, though not particularly restricted as to its species, is preferably one or more than one element selected from the group consisting of indium (In), germanium (Ge), silver (Ag), gold (Au), bismuth (Bi), selenium (Se), aluminum (Al), phosphorus (P), hydrogen (H), silicon (Si), carbon (C), vanadium (V), tungsten (W), tantalum (Ta), zinc (Zn), manganese (Mn), titanium (Ti), tin (Sn), palladium (Pd), lead (Pb), nitrogen (N), oxygen (O) and rare-earth elements (including scandium (Sc), yttrium (Y) and lanthanides). In the case of using laser beams with wavelengths from 390 nm to 420 nm in particular, it is preferable to select as the element M one or more than one element from the group consisting of silver (Ag), indium (In), germanium (Ge) and rare-earth elements. By this selection, it becomes possible to achieve excellent signal characteristics in the cases of using laser beams with wavelengths from 390 nm to 420 nm, notably in the case of using a laser beam of the order of 405 nm.

On the other hand, the phase-changing materials of intermetallic compound type represented by c= 1/3, 1/2 and 2/3 in ${{ {( G e T e )}_{c} {( S {b}_{2} T {e}_{3} )}_{1 - c} }}_{d} M {B}_{1 - d}$
are expressed as Ge₁Sb₄Te₇, Ge₁Sb₂Te₄ and Ge₂Sb₂Te₅, respectively, when the atomic ratio is presented in the form of a simplest integer ratio. In general the intermetallic compounds have the properties of being hard and resistant to deformation because of their brittleness. Therefore, if such intermetallic compounds are used as a main component in the light absorption layer 22, it might occur that they inhibit localized deformations to be caused in the dielectric layer 32 and the light absorption layer 22 in itself by decomposition reaction in the noble metal oxide layer 23, resulting in failure to acquire satisfactory signal characteristics. In contrast thereto, the use of the material represented by ${( S {b}_{a} T {e}_{1 - a} )}_{1 - b} M {A}_{b}$
as a main component in the light absorption layer 22 does not inhibit the localized deformation through decomposition reaction in the noble metal oxide layer 23, so that even when minute recording marks are formed it becomes possible to acquire satisfactory signal characteristics. This is a reason why the material represented by ${( S {b}_{a} T {e}_{1 - a} )}_{1 - b} M {A}_{b}$
is used as a main component constituting the light absorption layer 22 in the invention.

However, it little occurs that the phase changes caused in the light absorption layer 22 by recording manifest themselves in the form of signals.

The thickness of the light absorption layer 22 is preferably set at a value ranging from 5 nm to 100 nm, far preferably set at a value ranging from 10 nm to 80 nm, and particularly preferably set at a value ranging from 10 nm to 60 nm. This is because, when the light absorption layer 22 has a thickness thinner than 5 nm, there is a fear that it cannot absorb properly the laser beam energy; while, when the thickness is increased beyond 100 nm, much time is consumed in forming the layer to result in a lowering of productivity. Compared with these situations, the thickness setting of the light absorption layer 22 in the range of 10nm to 80 nm, especially 10 nm to 60 nm, makes it possible to fully absorb the energy of the laser beam 40 while ensuring high productivity.

The noble metal oxide layer 23 is a layer in which recording marks are formed by irradiation with the laser beam 40, and contains a noble metal oxide as a main component. The noble metal has no particular restriction as to its species, but it preferably includes at least one species chosen from platinum (Pt), silver (Ag) or palladium (Pd). Of these noble metals, platinum (Pt) in particular is suitable. In other words, the selection of platinum oxide (PtOₓ) as the material for the noble metal oxide layer 23 is particularly preferable. When platinum oxide (PtOₓ) is used as the material for the noble metal oxide layer, it becomes possible to acquire excellent signal characteristics and sufficient durability. In the case of using platinum oxide (PtOₓ) as the material for the noble metal oxide layer 23, it is appropriate that the value x be adjusted to make an extinction coefficient (k) below 3 (k<3) in the wavelength region of the laser beam 40 used.

The thickness of the noble metal oxide layer 23 has a great influence upon signal characteristics. In order to achieve excellent signal characteristics, it is appropriate that the thickness be set at a value ranging from 2 nm to 50 nm, preferably at a value ranging from 3 nm to 30 nm. In order to especially excellent signal characteristics, the thickness setting from 2 nm to 8 nm is preferred, the setting from 3 nm to 6 nm is far preferred, and the setting of the order of 4 nm is extremely preferred. This is because, when the thickness of the noble metal oxide layer 23 is thinner than 2 nm or thicker than 50 nm, there is a fear that recording marks cannot be formed in a good shape upon irradiation with laser beam 40 and the carrier/noise ratio (CNR) attained is not satisfactory. Compared with such thickness settings, the case where the thickness of the noble metal oxide layer 23 is set at a value ranging from 3 nm to 30 nm, especially at the order of 4 nm, enables formation of recording marks in a good shape and achievement of high CNR.

The dielectric layers 31, 32 and 33 play roles mainly in the physical and chemical protections of their respective adjacent layers and the adjustments of optical characteristics. In the present specification and claims, the dielectric layers 31, 32 and 33 are sometimes referred to as first, second and third dielectric layers, respectively. Materials usable as main components in the dielectric layers 31, 32 and 33 are oxides, sulfides, nitrides or combinations of these compounds. Suitable examples of such main components include the oxides, nitrides, sulfides and carbides of aluminum (Al), silicon (Si), cerium (Ce), titanium (Ti), zinc (Zn) and tantalum (Ta), such as Al₂O₃, AIN, ZnO, ZnS, GeN, GeCrN, CeO₂ SiO, SiO₂ Si₃N₄, SiC, La₂O₃, TaO, TiO₂, SiAlON (a mixture of SiO₂, Al₂O₃, Si₃N₄ and AlN), and LaSiON (a mixture of La₂O₃, SiO₂ and Si₃N₄), and mixtures of two or more of the above-recited ones. Of these compounds, a mixture of ZnS with SiO₂ is preferred over the others. In this case, it is favorable that the proportion of ZnS is adjusted to a value ranging from 70 mole % to 90 mole %, and the proportion of SiO₂ is adjusted to a value ranging from 10 mole % to 30 mole %. And it is most favorable that the ratio between ZnS and SiO₂ is adjusted to the order of 80:20 by mole.

The materials constituting the dielectric layers 31, 32 and 33 may be identical with one another, or may be partially or entirely different from one another. Further, at least one among the dielectric layers 31, 32 and 33 may have a multilayer structure made up of two or more layers.

The thickness of the dielectric layer 33 is preferably set at a value ranging from 10 nm to 140 nm, and far preferably set at a value ranging from 20 nm to 120 nm. This is because there is a fear that the dielectric layer 33 below 10 nm in thickness cannot fully protect the light absorption layer 22; while, when the thickness of the dielectric layer 33 is increased beyond 140 nm, it takes so long to form the layer and the productivity is lowered. Compared with such thickness settings, the dielectric layer 33 thickness settings from 20 nm to 120 nm make it possible to effectively protect the light absorption layer 22 while ensuring high productivity.

The thickness of the dielectric layer 32 is preferably set at a value ranging from 5 nm to 100 nm, and far preferably set at a value ranging from 20 nm to 100 nm. This is because there is a fear that the dielectric layer 32 below 5 nm in thickness is destroyed upon decomposition of the noble metal oxide layer 23 and fails to protect the noble metal oxide layer 23, while the dielectric layer 32 beyond 100 nm in thickness interferes with proper deformation of the noble metal oxide layer 23 at the time of recording. Compared with such thickness settings, the dielectric layer 23 thickness settings from 20 nm to 100 nm don't cause excessive hindrance to the deformation under recording and ensure proper protection of the noble metal oxide layer 23. In addition, the thickness of the dielectric layer 32 influences the signal characteristics at the time of reproduction of data, and the achievement of high CNR becomes possible by setting the thickness at a value ranging from 50 nm to 70 nm, particularly a value of the order of 60 nm.

The thickness of the dielectric layer 31 may be determined depending on the required reflectivity so far as it permits full protection of the noble metal oxide layer 23, and it is preferably set at, e.g., a value ranging from 30 nm to 120 nm, far preferably set at a value ranging from 50 nm to 100 nm, and particularly preferably set at a value of the order of 70 nm. This is because there is a fear that the dielectric layer 31 below 30 nm in thickness cannot fully protect the noble metal oxide layer 23, while the dielectric layer 31 beyond 120 nm in thickness requires a long time for formation thereof and causes a drop in productivity. Compared with these thickness settings, the dielectric layer 31 thickness settings from 50 nm to 100 nm, especially of the order of 70 nm, permit to fully protect the noble metal oxide layer 23 while ensuring high productivity.

The foregoing is a structure of the optical recording medium 10.

In manufacturing the optical recording medium 10 having such a structure, preparation for the supporting substrate 11 is made first, and then on the groove 11a- and land 11b-formed side of the substrate surface are formed successively the reflective layer 21, the dielectric layer 33; the light absorption layer 22, the dielectric layer 32, the noble metal oxide layer 23, the dielectric layer 31 and the light-transmitting layer 12 in the order of mention. In this way, the optical recording medium 10 can be manufactured. In other words, sequential formation of layers is carried out from the side opposite to the light-incidence plane 12a as in the case of next-generation optical recording media.

For forming the reflective layer 21, the dielectric layer 33, the light absorption layer 22, the dielectric layer 32, the noble metal oxide layer 23 and the dielectric layer 31, vapor deposition methods including a sputtering method and a vacuum evaporation method, wherein chemical species containing their respective constituent elements are used, can be adopted. Of these methods, the adoption of a sputtering method is advantageous over the others. On the other hand, the formation of the light-transmitting layer 12 can be performed, e.g., by viscosity-adjusted UV-curable resin of acrylic or epoxy type being made into a coating film according to a spin coating method and then the coating film being cured by irradiation with UV rays in the atmosphere of nitrogen. Instead of using the spin coating method, the light-transmitting layer may be formed using a light-transmitting sheet containing a light-transmitting resin as a major component and an adhesive of every kind or a pressure-sensitive adhesive.

Additionally, a hard coat layer may be provided on the surface of the light-transmitting layer 12 to protect the surface of the light-transmitting layer 12. In this case, the hard coat layer surface makes up the light-incidence plane 12a. Examples of a material usable for the hard coat layer include a UV-curable resin containing an epoxy acrylate oligomer (a difunctional oligomer), a multifunctional acrylic monomer, a monofunctional acrylic monomer and a photopolymerization initiator, the oxides, nitrides, sulfides and carbides of aluminum (Al), silicon (Si), cerium (Ce), titanium (Ti), zinc (Zn) and tantalum (Ta), and mixtures of two or more of these compounds. In the case of using the UV-curable resin as the material for the hard coat layer, the formation of resin layer on the light-transmitting layer 12 is carried out preferably by use of a spin coating method. When the foregoing oxide, nitride, sulfide, carbide or a mixture of two or more of these compounds is used, on the other hand, vapor deposition methods using chemical species containing those constituent elements, such as a sputtering method and a vacuum evaporation method, can be adopted. Of these methods, the sputtering method is used to particular advantage.

Moreover, it is preferable to prevent soil adhesion to the hard coat layer and enhance a soil-releasing function by adding lubricity to the hard coat layer. In order to impart the lubricity to the hard coat layer, it is effective to add a lubricant to a mother material of the hard coat layer. The lubricant is preferably chosen from silicone lubricants, fluorocarbon lubricants, or fatty acid ester lubricants, and the content thereof is preferably from 0.1 mass % to 5.0 mass %.

In the next place, the method and principle of recording data on the optical recording medium 10 according to an embodiment of the invention are illustrated below.

Data recording on the optical recording medium 10 is performed by irradiating the noble metal oxide layer 23 with the laser beam 40 of a wavelength shorter than 635 nm, notably a wavelength of the order of 405 nm as used for next-generation optical recording media, from the light-incidence plane 12a side while rotating the optical recording medium 10. In this case, the objective lens usable for focusing the laser beam 40 is an objective lens having a numerical aperture greater than 0.6, notably a numerical aperture of the order of 0.85 as used for next-generation optical recording media. In other words, the recording of data can be performed using the same optical systems as used for next-generation optical recording media.

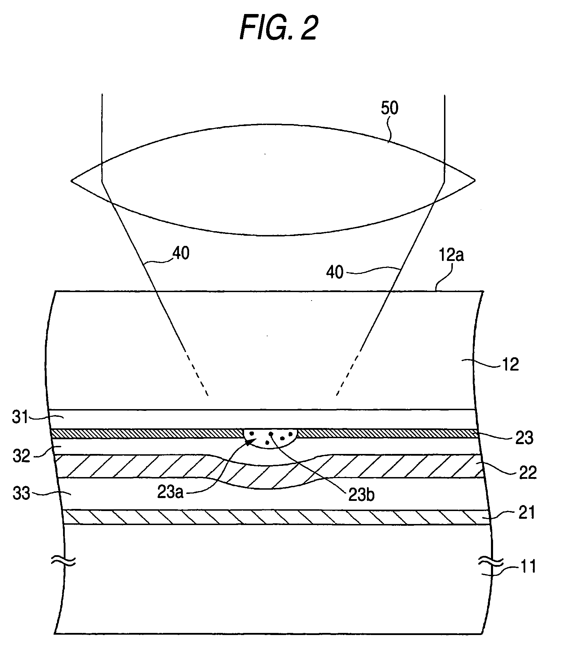

Fig. 2 is a cross-sectional sketch illustrating schematically a situation that occurs when the optical recording medium 10 is irradiated with a laser beam 40. Incidentally, the cross section of the optical recording medium 10 shown in Fig. 2 is a cross section along the groove 11a or the land 11b.

When the laser beam 40 with the wavelength as defined above is focused with the objective lens 50 having the numerical aperture as defined above and applied to the optical recording medium 10, as shown in Fig. 2, the noble metal oxide layer 23 is decomposed in the central part of a beam spot to form bubble bit 23a filled with oxygen gas (O₂). In the interior of the bubble bit 23a, fine particles 23b of the constituent metal are brought into a dispersed state. At this point, layers present around the bubble bit 23a undergo plastic deformation by the pressure from the bubble bit 23a. Accordingly, this bubble bit 23a can be used as an irreversible mark of recording. In the case of using, e.g., platinum oxide (PtOₓ) as the material of the noble metal oxide layer, the platinum oxide (PtOₓ) decomposes into platinum (Pt) and oxygen gas (O₂) in the central part of a beam spot and brings about a state in which fine particles of platinum (Pt) are dispersed in the bubble bit 23a. The portion of the noble metal oxide layer 23 in which any bubble bit 23a is not formed is a blank area.

The decomposition in the noble metal oxide layer 23 does not occur throughout the beam spot, but takes place, as mentioned above, only in the central part of the beam spot. Accordingly, the bubble bit 23a (mark of recording) formed is smaller than the beam spot diameter, so that super-resolution recording can be achieved. The following are reasons why such a super-resolution recording can be performed.

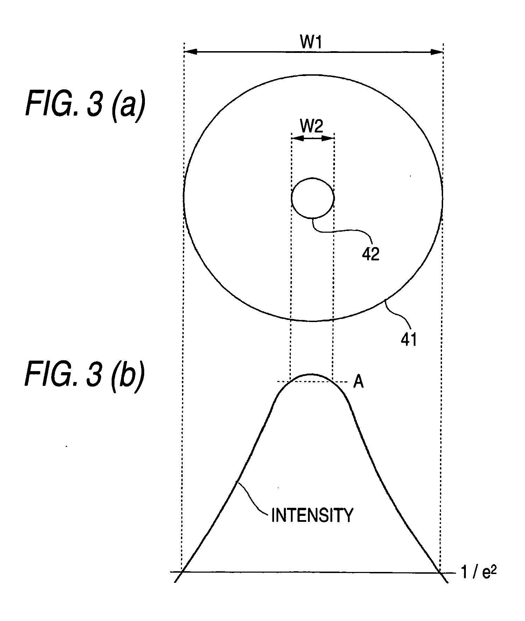

Fig. 3(a) is a plan view showing a beam spot of the laser beam 40 on the noble metal oxide layer 23, and Fig. 3(b) is a curve showing intensity distribution in the beam spot.

Although the beam spot 41 is nearly circular in planer shape as shown in Fig. 3(a), the intensity distribution of the laser beam 40 in the interior of the beam spot 41 is not uniform but describes a Gaussian curve as shown in Fig. 3(b). In other words, higher energy is applied to an area the closer the area lies to the center of the beam spot 41. Therefore, the setting of a certain threshold value A far in excess of the maximum intensity 1/e² can render the diameter W2 of the area 42, wherein the intensity becomes higher than the threshold value A, sufficiently smaller than the diameter W1 of the beam spot 41. This situation means that, as far as the noble metal oxide layer 23 has a property of decomposing upon the irradiation with a laser beam of intensity higher than the threshold value A, the bubble bit 23 a (mark of recording) is selectively formed only in the part corresponding to the area 42 in the beam spot 41 of the area irradiated with the laser beam 40.

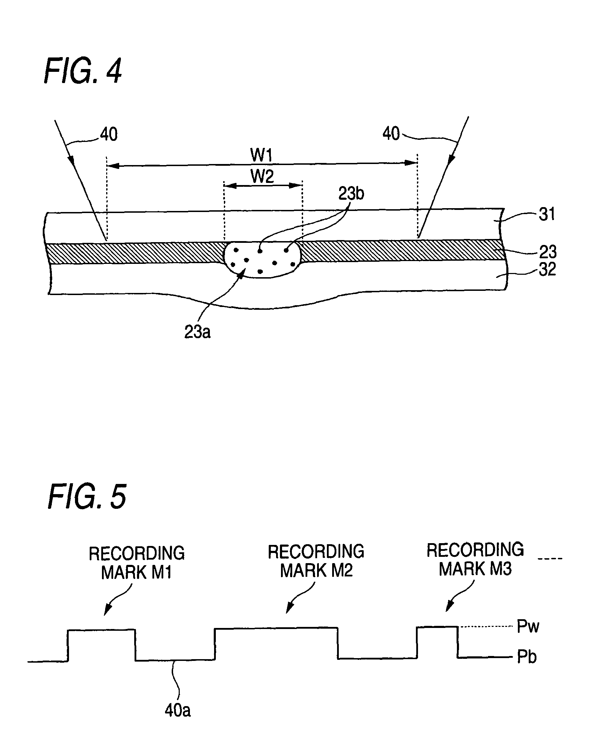

Thus, as shown in Fig. 4, the bubble bit 23a (mark of recording) sufficiently smaller than the diameter W1 of the beam spot can be formed in the noble metal oxide layer 23 and the diameter thereof becomes close to W2. Namely, the relationship between the apparent beam spot diameter W2 and the actual beam spot diameter W1 becomes W1>W2; as a result, super-resolution recording is achieved. Herein, platinum oxide (PtOₓ) as the most suitable material for the noble metal oxide layer 23 has a property of decomposing upon heating to 580°C, so that the irradiation intensity capable of raising the temperature of the noble metal oxide layer 23 up to 580°C or above becomes the threshold value A.

Accordingly, when the optical recording medium 10 is being rotated and irradiated with the intensity-modulated laser beam 40 along the groove 11 a and/or the land 11b, it becomes possible to form marks of recording more minute than the resolution limit in the desired areas of the noble metal oxide layer 23.

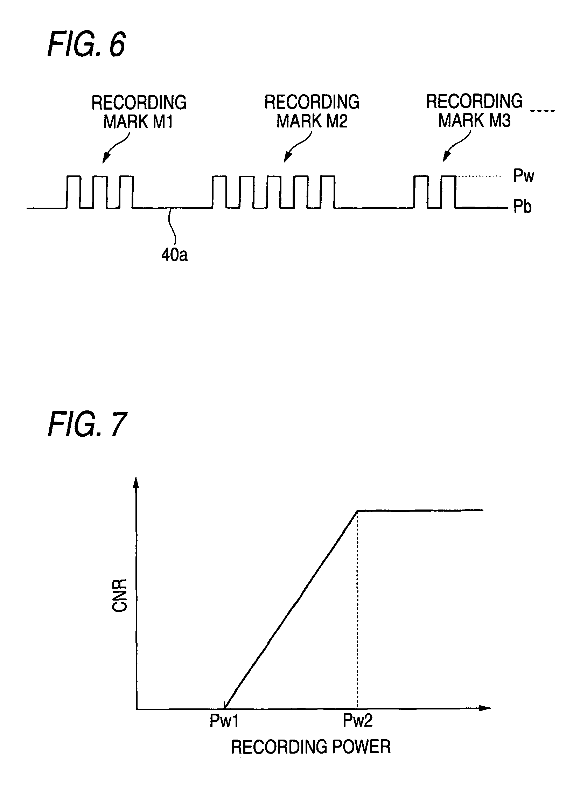

Fig. 5 is a drawing of the waveform showing an example of an intensity-modulation pattern of the laser beam 40 under recording. As shown in Fig. 5, it is recommended that the intensity 40a of the laser beam 40 under recording is set at a recording power (=Pw) on the areas where recording marks M1, M2, M3 and so forth have to be formed, while it is set at a base power (=Pb) on the areas where no recording marks should be formed (blank areas). Thus the formation of bubble bits 23a through decomposition in the noble metal oxide layer 23 takes place only in the areas irradiated with the laser beam 40 having the recording power Pw, and thereby the formation of recording marks M1, M2, M3 and so forth having the desired lengths, respectively, becomes possible. Alternatively, without limited to the intensity-modulation pattern shown in Fig. 5, the intensity-modulation pattern of the laser beam 40 under recording may be formed of the recording marks M1, M2, M3 and so forth which are made with their respective trains of spaced pulses as shown in Fig. 6.

Fig. 7 is a graph showing schematically a relationship between a recording power of the laser beam 40 and a CNR of the reproduction signal produced by the subsequent reproduction.

As shown in Fig. 7, where the recording power of the laser beam 40 is lower than Pw1 in the recording on the optical recording medium 10, effective reproduction signals are not produced in the subsequent reproduction. As a reason for this situation, it is thought that the noble metal oxide layer 23 undergoes substantially no decomposition when the recording power of the laser beam 40 is lower than Pw1. In addition, in the region where the recording power of the laser beam 40 is from Pw1 to under Pw2 (>Pw1), the higher the recording power, the higher CNR can be ensured in the subsequent reproduction. As a reason for this situation, it is thought that the decomposition in the noble metal oxide layer 23 occurs partially in the region where the recording power of the laser beam 40 is from Pw1 to under Pw2; as a result, the higher the recording power, the greater the amount of decomposition. And, even when the recording power is increased any further in the region where the recording power of the laser beam 40 is Pw2 or above, the CNR attained in the subsequent reproduction remains about the same. As a reason for this situation, it is thought that the noble metal oxide layer 23 undergoes almost thorough decomposition in the region where the recording power of the laser beam 40 is Pw2 or above. In view of the foregoing, it can be said that the appropriate recording power setting of the laser beam 40 is Pw2 or above.

The value of Pw2, though varies depending on the makeup of the optical recording medium 10 (components in each constituent layer, thickness of each constituent layer, and so on) and the recording conditions (the recording linear speed, the wavelength of the laser beam 40, and so on), is in the following range $5.0 mW \leq P w 2 \leq 9.0 mW$
when the recording linear speed is of the order of 6.0 m/s, the wavelength of the laser beam 40 is of the order of 405 nm and the numerical aperture of the objective lens 50 is of the order of about 0.85; and $P w 1 \times 1.4 \leq P w 2 \leq P w 1 \times 2.0$
holds for the relationship between Pw2 and the Pw1.

In the practical settings of the recording power, it is preferable that the recording power is set at a value higher than Pw2 by at least 0.3 mW with consideration given to variations in conditions for manufacturing the optical recording medium 10, power fluctuations of the laser beam 40 and so on. This is because a lot of real harm is not caused even when the practical recording power is too high as compared with Pw2, and an adequate margin has to be provided for Pw2. However, the recording power higher than required is a waste of energy, so there is no necessity to set the recording power at a value higher than Pw2 by 2.0 mW or above. Accordingly, it is said that the practical recording power setting may range from 5.3 mW (=5.0 mW + 0.3 mW) to 11.0 mW (=9.0 mW + 2.0 mW).

The foregoing are the hows and whys of recording data on the optical recording medium 10.

For reproduction of the data thus recorded, it is recommended that the optical recording medium 10 is irradiated with the laser beam 40 of intensity fixed at a predetermined value (reproducing power=Pr) along the groove 11 a and/or the land 11b as it is rotated. And the light reflected from the recording medium 10 in the foregoing condition undergoes photoelectric conversion, and thereby it becomes possible to obtain electric signals responsive to a train of marks of recording. Although reasons for the possibility of super-resolution reproduction are not necessarily clear, it can be presumed that some interaction occurs between the laser beam 40 and metal particulates 23 b present in bubble bits 23a upon irradiation with the laser beam 40 set at the reproducing power and thereby super-resolution reproduction becomes possible.

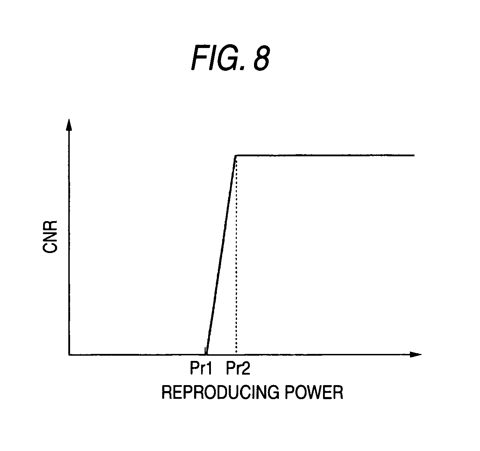

Fig. 8 is a graph showing schematically a relationship between a reproducing power of the laser beam 40 and CNR.

As shown in Fig. 8, effective reproduction signals are hardly produced when the reproducing power of the laser beam 40 is lower than Pr1, but CNR is quickly heightened when the reproducing power is set at a value of Pr1 or above and becomes saturated when the reproducing power is increased up to Pr2 (>Pr1). Although a reason for causing such phenomena is not necessarily clear, it can be presumed that interaction between metal particulates 23b and the light takes place or becomes pronounced by irradiation with the laser beam 40 set at Pr1 or above. Therefore, it is required that the reproducing power of the laser beam 40 be set at Pr1 or above, and the reproducing power setting of Pr2 or above is preferable.

However, when the reproducing power setting is too high, there is a fear that the noble metal oxide layer 23 causes decomposition in blank areas, and the occurrence of such a decomposition results in substantial reproduction deterioration, or disappearance of data in some cases. In view of this point, it is preferable that the reproducing power of the laser beam 40 is set at Pr2 or above and under Pw1.

The value of Pr2, though varies depending on the makeup of the optical recording medium 10 (components in each constituent layer, thickness of each constituent layer, and so on) and the reproducing conditions (the reproducing linear speed, the wavelength of the laser beam 40, and so on), is in the following range $1.0 mW \leq Pr 2 \leq 3.0 mW$
when the reproducing linear speed is of the order of 6.0 m/s, the wavelength of the laser beam 40 is of the order of 405 nm and the numerical aperture of the objective lens 50 is of the order of about 0.85; and, $Pr 1 \times 1.05 \leq Pr 2 \leq Pr 1 \times 1.6$
holds for the relationship between Pr2 and the Pr1.

It is preferable that the practical reproducing power setting is adjusted to a value from 0.1 to 0.3 mW higher than Pr2. This is because, in the reproducing power setting greater than Pr2, any further increase in reproducing power not only yields no improvement in CNR but also tends to cause deterioration from reproducing, so that the practical reproducing power has to be set at a level a little higher than Pr2 in order to control deterioration from reproducing. In general, power fluctuations of the laser beam 40 are below 0.1 mW in the 1- to 3-mW range of output, so that the setting at a level from 0.1 to 0.3 mW higher than Pr2 is thought to be adequate even with consideration of variations in conditions for manufacturing the optical recording medium 10, and so on. Thus it can be said that the practical reproducing power setting from 1.1 mW (=1.0 mW + 0.1 mW) to 3.3 mW (=3.0 mW + 0.3 mW) is recommendable.

Considering that the reproducing power on optical recording media currently in use is generally of the order of 0.1 mW to 0.5 mW and there is almost no cases where the reproducing power is set at about 0.8 mW or above even on next-generation optical recording media provided with two recording layers per side, it is apparent that the reproducing power level in the mode carrying out the invention is significantly high, compared with those on hitherto known optical recording media.

Further, as the relationship between the practical reproducing power and the practical recording power, it can be said that the setting of $P w \times 0.1 \leq Pr \leq P w \times 0.5$
is suitable, and the setting of $P w \times 0.1 \leq Pr \leq P w \times 0.4$
is more suitable. It is also apparent from such relationship that the reproducing power level in the mode carrying out the invention is significantly high, compared with those on hitherto known optical recording media.

With respect to the values to be set as the practical recording power and the practical reproducing power, it is preferable that they are stored as "setting information" in the optical recording medium 10 concerned. At the occasion of practical recording and reproduction of data by users, storage of such setting information in the optical recording medium 10 enables the users to read the setting information by means of an optical record reproducing apparatus and determine the recording power and the reproducing power on the basis of the information read.

It is far preferred that the setting information includes not only information about the recording power and the reproducing power but also information required for specifying various conditions (such as a linear speed) necessary to perform recording and reproduction of data on the optical recording medium 10. The setting information may be information recorded as wobbles or pre-pits, or information recorded as data in the noble metal oxide layer 23. Further, the setting information may be not only information indicating directly various conditions necessary to record and reproduce data but also information indicating indirectly the recording power, the reproducing power and so on by specifying some of various conditions previously stored in an optical recording-and-reproducing apparatus.

In accordance with the foregoing mode of carrying out the invention, super-resolution recording and super-resolution reproduction can be carried out at a λ/NA setting of 640 nm or below by use of a laser beam with a wavelength (λ) shorter than about 635 nm and an objective lens with a numerical aperture greater than about 0.6, and it becomes possible to obtain excellent characteristics, notably in the super-resolution recording and super-resolution reproduction using a laser beam with a wavelength of about 405 nm and an objective lens with a numerical aperture of about 0.85 which are used for next-generation optical recording media. Therefore, the same recording-and-reproducing apparatus as used for next-generation optical recording media can be utilized, so it becomes possible to reduce the costs for development and production of recording-and-reproducing apparatus. Moreover, the material containing a substance represented by ${( S {b}_{a} T {e}_{1 - a} )}_{1 - b} M {A}_{b}$
as a main component is used as the material for the light absorption layer 22, so that marks of recording can be easily formed and it becomes therefore possible to achieve excellent signal characteristics even when minute marks of recording are formed.

The invention is not limited to the aforementioned mode of implementation, but various modifications can be made within the scope of the invention as hereinafter described in Claims. And it goes without saying that such modified modes are also incorporated in the scope of the invention.

For instance, the structure of the optical recording medium 10 as shown in Fig. 1 is strictly a preferred structure of an optical recording medium according to the invention, and this structure should not be construed as limiting the structure of an optical recording medium according to the invention. Specifically, there's nothing wrong with providing an additional noble metal oxide layer on the supporting substrate 11 side when viewed from the light absorption layer 22, or an additional light absorption layer on the light-transmitting layer 12 side when viewed from the noble metal oxide layer 23.

Further, an optical recording material according to the invention can be structured to have recording surfaces on both sides by providing various functional layers, such as the light absorption layer 22 and the noble metal oxide layer 23, on either side of the supporting substrate 11, or it can be structured to have two or more recording surfaces on one side by laminating two or more sets of various functional layers via transparent interlayers on one side of the supporting substrate 11.

Furthermore, although the noble metal oxide layer 23 is used as the recording layer having the function as a generation source of the bubble bit 23 a in the aforementioned mode of implementation, there's no wrong with using a noble metal nitride layer in place of the noble metal oxide layer. In this case also, at least any one of platinum (Pt), silver (Ag) and palladium (Pd), especially platinum (Pt), is preferred as the noble metal species. In other words, it is preferred to select platinum nitride (PtNₓ) in particular. When the noble metal nitride layer is used, the gas bubble 23 is formed of nitrogen gas (N₂) evolved by decomposition, and the nitrogen gas (N₂) has very low possibilities for oxidizing or rotting other layers because of its very high chemical stability; as a result, it becomes possible to obtain high storage reliability.

In addition, although the noble metal oxide layer 23 is sandwiched between the dielectric layers 31 and 32 in the aforementioned mode of implementation, the dielectric layer 31 can be omitted as far as too large deformation of the mark areas formed by decomposition in the noble metal oxide layer 23 can be suppressed.

### [Examples]

Examples of the invention are illustrated below, but no limits should be imposed on the invention by these examples.

### [Preparation of Samples]

### Example 1

An optical recording medium sample having the same structure as the optical recording medium 10 shown in Fig. 1 was prepared in the following manner.

To begin with, a disk-shaped supporting substrate 11 made from polycarbonate, measuring about 1.1 mm in thickness and about 120 mm in diameter, and having a groove 11a and a land 11b formed on the surface was prepared in accordance with an injection molding method.

Next this supporting substrate 11 was set in a sputtering apparatus and, on the groove 11a- and land 11b-formed side of the substrate, an about 20 nm-thick reflective layer 21 constituted substantially of platinum (Pt), an about 100 nm-thick dielectric layer 33 constituted substantially of a mixture of ZnS and SiO₂ (molar ratio = about 80:20), an about 20 nm-thick light absorption layer 22 constituted substantially of a material represented by Sb_{74.1}Te_{25.9} (wherein the numerical subscripts are expressed in mole %, and the same goes hereinafter exclusive of the cases where the atomic ratio is expressed in the simplest integral ratio), an about 60 nm-thick dielectric layer 32 constituted substantially of a mixture of ZnS and SiO₂ (molar ratio = about 80:20), an about 4 nm-thick noble metal oxide layer 23 constituted substantially of platinum oxide (PtOₓ), and an about 70 nm-thick dielectric layer 31 constituted substantially of a mixture of ZnS and SiO₂ (molar ratio = about 80:20) were formed successively in accordance with a sputtering method.

Herein, the noble metal oxide layer 23 was formed using platinum (Pt) as a target and a mixture of oxygen gas (O₂) and argon gas (Ar) (flow-rate ratio = 1:3) as sputter gas, and setting the pressure in a chamber at 0.14Pa and the sputtering power at 100W. By these settings, the platinum oxide formed (PtOₓ) came to have an extinction coefficient (k) of about 1.69.

Then, a UV-curable resin of acrylic type was coated on the dielectric layer 31 by use of a spin coating method, and irradiated with ultraviolet rays, thereby forming an about 100 µm-thick light-transmitting layer 12. Thus, an optical recording medium sample according to Example 1 was completed.

### Example 2

An optical recording medium sample according to Example 2 was prepared in the same manner as the optical recording medium sample according to Example 1, except that the thickness of the light absorption layer 22 was set at about 60 nm.

### Example 3

An optical recording medium sample according to Example 3 was prepared in the same manner as the optical recording medium sample according to Example 1, except that the material represented by Ge_{6.5}Sb_{73.5}Te_{18.0}Tb_{2.0} was used as the material for the light absorption layer 22.

### Example 4

An optical recording medium sample according to Example 4 was prepared in the same manner as the optical recording medium sample according to Example 3, except that the thickness of the light absorption layer 22 was set at about 60 nm.

### Example 5

An optical recording medium sample according to Example 5 was prepared in the same manner as the optical recording medium sample according to Example 1, except that the material represented by Ag_{5.9}In_{4.4}Sb_{61.1}Te_{28.6} was used as the material for the light absorption layer 22 and the thickness thereof was set at about 60 nm.

### Example 6

The same supporting substrate 11 as mentioned above was set in the sputtering apparatus and, on the groove 11a- and land 11b-formed side of the substrate, an about 80 nm-thick dielectric layer 33 constituted substantially of a mixture of ZnS and SiO₂ (molar ratio = about 80:20), an about 20 nm-thick light absorption layer 22 constituted substantially of a material represented by In_{1.1}Ge_{6.9}Sb_{73.9}Te_{18.1}, an about 40 nm-thick dielectric layer 32 constituted substantially of a mixture of ZnS and SiO₂ (molar ratio = about 80:20), an about 4 nm-thick noble metal oxide layer 23 constituted substantially of platinum oxide (PtOₓ), and an about 100 nm-thick dielectric layer 31 constituted substantially of a mixture of ZnS and SiO₂ (molar ratio = about 80:20) were formed successively in accordance with a sputtering method.

Herein, the noble metal oxide layer 23 was formed using platinum (Pt) as a target and a mixture of oxygen gas (O₂) and argon gas (Ar) (flow-rate ratio = 1:2) as sputter gas, and setting the pressure in a chamber at 0.14Pa and the sputtering power at 100W. By these settings, the platinum oxide formed (PtOₓ) came to have an extinction coefficient (k) of about 1.69.

Then, a UV-curable resin of acrylic type was coated on the dielectric layer 31 by use of a spin coat method, and irradiated with ultraviolet rays, thereby forming a light-transmitting layer 12 about 100 µm in thickness. Thus, an optical recording medium sample according to Example 1 was completed. As described above, the reflective layer 21 was omitted from the optical recording medium sample according to Example 6.

### Example 7

An optical recording medium sample according to Example 7 was prepared in the same manner as the optical recording medium sample according to Example 6, except that the thickness of the light absorption layer 22 was set at about 60 nm.

### Example 8

An optical recording medium sample according to Example 8 was prepared in the same manner as the optical recording medium sample according to Example 6, except that the material represented by Ag_{5.9}In_{4.4}Sb_{61.1}Te_{28.6} was used as the material for the light absorption layer 22.

### Example 9

An optical recording medium sample according to Example 9 was prepared in the same manner as the optical recording medium sample according to Example 8, except that the thickness of the light absorption layer 22 was set at about 60 nm.

### Comparative Example 1

An optical recording medium sample according to Comparative Example 1 was prepared in the same manner as the optical recording medium sample according to Example 1, except that a phase-changing material of the intermetallic compound type represented by Ge_{22.2}Sb_{22.2}Te_{55.6} was used as the material for the light absorption layer 22. That material can be represented as Ge₂Sb₂Te₅ when the atomic ratio is expressed in the simplest integral ratio.

### Comparative Example 2

An optical recording medium sample according to Comparative Example 2 was prepared in the same manner as the optical recording medium sample according to Example 1, except that a phase-changing material of the intermetallic compound type represented by Ge_{14.3}Sb_{28.6}Te_{57.1} was used as the material for the light absorption layer 22. That material can be represented as Ge₁Sb₂Te₄ when the atomic ratio is expressed in the simplest integral ratio.

### Comparative Example 3

An optical recording medium sample according to Comparative Example 3 was prepared in the same manner as the optical recording medium sample according to Comparative Example 2, except that the thickness of the light absorption layer 22 was set at about 60 nm.

### Comparative Example 4

An optical recording medium sample according to Comparative Example 4 was prepared in the same manner as the optical recording medium sample according to Example 1, except that a phase-changing material of the intermetallic compound type represented by Ge_{8.3}Sb_{33.3}Te_{58.4} was used as the material for the light absorption layer 22. That material can be represented as Ge₁Sb₄Te₇ when the atomic ratio is expressed in the simplest integral ratio.

### Comparative Example 5

An optical recording medium sample according to Comparative Example 5 was prepared in the same manner as the optical recording medium sample according to Comparative Example 4, except that the thickness of the light absorption layer 22 was set at about 60 nm.

### Comparative Example 6

An optical recording medium sample according to Comparative Example 6 was prepared in the same manner as the optical recording medium sample according to Example 1, except that antimony (Sb) alone in a substantial sense was used as the material for the light absorption layer 22 and the thickness of this layer was set at about 60 nm.

### Comparative Example 7

An optical recording medium sample according to Comparative Example 7 was prepared in the same manner as the optical recording medium sample according to Example 1, except that tellurium (Te) alone in a substantial sense was used as the material for the light absorption layer 22 and the thickness of this layer was set at about 60 nm.

The material and thickness of the light absorption layer 22, and the presence or absence of the reflective layer 21 in each of the optical recording medium samples according to Examples 1 to 9 and Comparative Examples 1 to 7 are summarized in the following table.

**[Table 1]**

| | Material of Light Absorption Layer | Thickness of Light Absorption Layer | Presence or Absence of Reflective Layer |
|---|---|---|---|
| Example 1 | Sb_{74.1}Te_{25.9} | 20 nm | presence |
| Example 2 | Sb_{74.1}Te_{25.9} | 60 nm | presence |
| Example 3 | Ge_{6.5}Sb_{73.5}Te_{18.0}Tb_{2.0} | 20 nm | presence |
| Example 4 | Ge_{6.5}Sb_{73.5}Te_{18.0}Tb_{2.0} | 60 nm | presence |
| Example 5 | Ag_{5.9}In_{4.4}Sb_{61.1}Te_{28.6} | 60 nm | presence |
| Example 6 | In_{1.1}Ge_{6.9}Sb_{73.9}Te_{18.1} | 20 nm | absence |
| Example 7 | In_{1.1}Ge_{6.9}Sb_{73.9}Te_{18.1} | 60 nm | absence |
| Example 8 | Ag_{5.9}In_{4.4}Sb_{61.1}Te_{28.6} | 20 nm | absence |
| Example 9 | Ag_{5.9}In_{4.4}Sb_{61.1}Te_{28.6} | 60 nm | absence |
| Comparative Example 1 | Ge_{22.2}Sb_{22.2}Te_{55.6} | 20 nm | presence |
| Comparative Example 2 | Ge_{14.3}Sb_{28.6}Te_{57.1} | 20 nm | presence |
| Comparative Example 3 | Ge_{14.3}Sb_{28.6}Te_{57.1} | 60 nm | presence |
| Comparative Example 4 | Ge_{8.3}Sb_{33.3}Te_{58.4} | 20 nm | presence |
| Comparative Example 5 | Ge_{8.3}Sb_{33.3}Te_{58.4} | 60 nm | presence |
| Comparative Example 6 | Sb | 60 nm | presence |
| Comparative Example 7 | Te | 60 nm | presence |

### [Evaluations of Characteristics]

To begin with, the optical recording medium samples of Examples 1 to 9 and Comparative Examples 1 to 7 were each set in an optical disc drive evaluation device (DDU1000, made by Pulstec Industrial Co., Ltd.), and a laser beam with a wavelength of about 405 nm was applied to their respective noble metal oxide layers 23 via an objective lens with a numerical aperture of about 0.85 from their respective light-incidence planes 12a as they were each rotated at a linear speed of about 6.0 m/s, and thereby single frequency signals 75 nm in both recording mark length and blank length were recorded on each of the optical recording medium samples of Examples 1 to 5 and Comparative Examples 1 to 7, while single frequency signals 80 nm in both recording mark length and blank length were recorded on each of the optical recording medium samples of Examples 6 to 9. Incidentally, the resolution limit given by ${d}_{2} = λ / 4 N A$
is about 120 nm when the foregoing optical system is used.

With respect to the power of laser beam 40 during the recording, the recording power (Pw) was set at a level providing the highest CNR (optimum recording power) for every optical recording medium sample, and the base power (Pb) was set at approximately 0 mW. And the pattern shown in Fig. 5 was used as the pulse pattern of the laser beam 40.

Then, the single frequency signals recorded were reprodiced, and the CNR values thereof were measured. The reproducing power (Pr) of the laser beam 40 was set at a level providing the highest CNR (optimum reproducing power) for each optical recording medium sample. The optimum recording power and optimum reproducing power for each optical recording medium sample were the same as shown in Table 2.

**[Table 2]**

| | Optimum Recording Power | Optimum Reproducing Power |
|---|---|---|
| Example 1 | 8.5mW | 2.6mW |
| Example 2 | 8.0mW | 2.8mW |
| Example 3 | 9.0mW | 2.4mW |
| Example 4 | 8.0mW | 2.8mW |
| Example 5 | 8.5mW | 2.6mW |
| Example 6 | 4.5mW | 2.0mW |
| Example 7 | 5.5mW | 2.4mW |
| Example 8 | 4.5mW | 1.8mW |
| Example 9 | 5.5mW | 1.8mW |
| Comparative Example 1 | 8.0mW | 2.0mW |
| Comparative Example 2 | 9.0mW | 2.6mW |
| Comparative Example 3 | 8.0mW | 1.4mW |
| Comparative Example 4 | 11.0mW | 2.6mW |
| Comparative Example 5 | 7.0mW | 2.0mW |
| Comparative Example 6 | 11.0mW | 3.0mW |
| Comparative Example 7 | 8.0mW | 1.8mW |

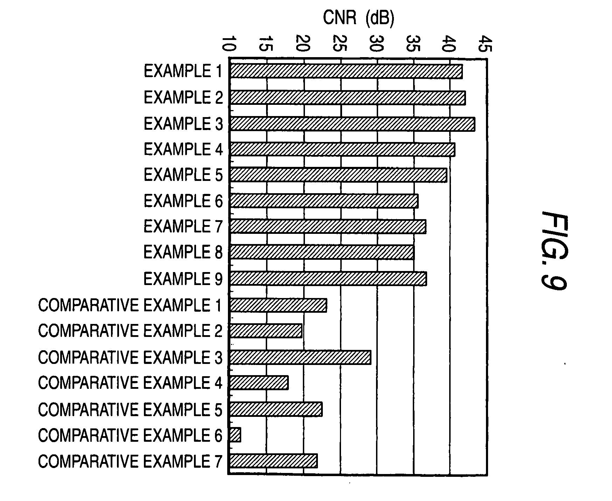

Results of CNR measurements are shown in Fig. 9.

As shown in Fig. 9, every one of the optical recording medium samples of Examples 1 to 9 in which their respective light absorption layers 22 were made up of materials represented by ${( S {b}_{a} T {e}_{1 - a} )}_{1 - b} M {A}_{b}$
achieved high CNR in exceed of 35 dB, whereas the CNR values lower than 30 dB were attained by all the optical recording medium samples of Comparative Examples 1 to 7
wherein their respective light absorption layers 22 were made up of phase-changing materials of intermetallic compound type or simple metals. By these measurements, it was confirmed that high CNR is obtainable by use of the materials represented above.

### <Industrial Applicability>

In accordance with the invention, super-resolution recording and super-resolution reproduction at a λ/NA setting below 640 nm can be performed by use of a laser beam with a wavelength shorter than 635 nm and an objective lens with a numerical aperture in excess of about 0.6, and it becomes possible to obtain excellent characteristics, notably in the super-resolution recording and super-resolution reproduction using a laser beam with a wavelength of about 405 nm and an objective lens with a numerical aperture of about 0.85 which are used for next-generation optical recording media. Accordingly, the same recording-and-reproducing apparatus as used for next-generation optical recording media can be utilized, so the costs for development and production of recording-and-reproducing apparatus can be reduced.

## Claims

1. An optical recording medium comprising:
a supporting substrate ranging in thickness from 0.6 mm to 2.0 mm and
a light-transmitting layer ranging in thickness from 10 µm to 200 µm, and
between the light-transmitting layer and the supporting substrate, a first dielectric layer, a noble metal oxide layer, a second dielectric layer, a light absorption layer and a third dielectric layer in this arranging order when viewed from the light-transmitting layer side,
wherein the light absorption layer containing as a main component a material that is represented by ${( S {b}_{a} T {e}_{1 - a} )}_{1 - b} M {A}_{b}$
where MA is an element other than antimony (Sb) and tellurium (Te), 0<a<1 and 0≤b<1, and besides,
that is different from an intermetallic compound represented by ${{ {( G e T e )}_{c} {( S {b}_{2} T {e}_{3} )}_{1 - c} }}_{d} M {B}_{1 - d}$
where MB is an element other than antimony (Sb), tellurium (Te) and germanium (Ge), c is 1/3, 1/2 or 2/3, and 0<d≤1 .

2. An optical recording medium as described in claim 1, wherein the noble metal oxide layer contains platinum oxide (PtOₓ)

3. An optical recording medium as described in claim 1 or 2, further comprising a reflective layer between the supporting substrate and the third dielectric layer.

4. An optical recording medium as described in any of claims 1 to 3,
wherein the noble metal oxide layer has a thickness from 2 nm to 50 nm, the second dielectric layer has a thickness from 5 nm to 100 nm, the light absorption layer has a thickness from 5 nm to 100 nm, and the third dielectric layer has a thickness from 10 nm to 140 nm.

5. A manufacturing method of an optical recording medium, comprising:
a first process of forming on a supporting substrate a reflective layer, a third dielectric layer, a light absorption layer, a second dielectric layer, a noble metal oxide layer and a first dielectric layer in this order, and
a second process of forming a light-transmitting layer on the first dielectric layer,
wherein the light absorption layer a material as a main component that is represented by ${( S {b}_{a} T {e}_{1 - a} )}_{1 - b} M {A}_{b}$
where MA is an element other than antimony (Sb) and tellurium (Te), 0<a<1 and 0≤b<1, and besides
that is different from an intermetallic compound represented by ${{ {( G e T e )}_{c} {( S {b}_{2} T {e}_{3} )}_{1 - c} }}_{d} M {B}_{1 - d}$
where MB is an element other than antimony (Sb), tellurium (Te) and germanium (Ge), c is 1/3, 1/2 or 2/3, and 0<d≤1.

6. A manufacturing method of an optical recording medium as described in claim 5, wherein the first process is carried out according to a vapor deposition method and the second process is carried out according to a spin coating method.

7. A data recording method in which data is recorded on an optical recording medium as described in any of claims 1 to 5 by irradiation with a laser beam from the light-transmitting layer side,
wherein, when the wavelength of the laser beam is represented as λ and the numerical aperture of an objective lens for focusing the laser beam is represented as NA, λ/NA is set at 640 nm or below and a train of recording marks including recording marks λ/4NA or below in length is recorded.

8. A data reproducing method in which data is reproduced on an optical recording medium as described in any of claims 1 to 5 by irradiation with a laser beam from the light-transmitting layer side,
wherein, when the wavelength of the laser beam is represented as λ and the numerical aperture of an objective lens for focusing the laser beam is represented as NA, λ/NA is set at 640 nm or below and the data is reproduced from a train of recorded marks including the recorded marks λ/4NA or below in length.
